# EUROPEAN PATENT APPLICATION

(11) **EP 3 070 693 A1**
(43) Date of publication of application: **21.09.2016**
(21) Application number: 14861461.3
(22) Date of filing: 07.11.2014
(51) Int. Cl.: G07F 19/00, G07F 7/08, G06Q 20/20

(54) **OFFLINE LOADING METHOD AND SYSTEM FOR ELECTRONIC CASH OF IC CARD**

(30) Priority: 12.11.2013 CN 201310559089
(71) Applicant: China Unionpay Co., Ltd., Shanghai 200135 (CN)
(72) Inventor: CHEN, Chengqian, Shanghai 200135 (CN); ZHOU, Yu, Shanghai 200135 (CN); GUO, Wei, Shanghai 200135 (CN)
(74) Representative: Seemann & Partner
(86) International application number: PCT/CN2014/090551
(87) International publication number: WO 2015/070730

(57) **Abstract**

The invention relates to an IC card electronic cash offline loading system, which comprises an IC card, a POS terminal, and a bank backstage system, wherein the IC card comprises electronic cash and a load application module. The load application module comprises a recharging module and a first interaction module, wherein the recharging module is used for performing data interaction with the electronic cash and for completing load of the electronic cash, the first interaction module is used for performing data interaction with the POS terminal and for transmitting loaded amount data to the recharging module; the POS terminal has a loading device comprising a second interaction module used for performing data interaction with the load application module and a recharged amount up-loading module used for transmitting the loaded amount data sent from the load application module to the bank backstage system. With the invention, an offline load of electronic cash is enabled. Moreover, users can use electronic cash more conveniently, and simultaneously, the security of the account of electronic cash can be enhanced.

## Description

### Related applications

This application is a translation of the international application PCT/CN2014/090551 filed on November 07, 2014, which in turn claims priority from the Chinese application with the official file number 201310559089.0, filed on November 12, 2013. The entire contents of both applications are incorporated herein by reference.

### FIELD OF THE INVENTION

The invention relates to a data processing system and data process method for processing financial data, and in particular, to an IC card electronic cash offline loading system and an IC card electronic cash offline loading method.

### BACKGROUND

Currently, offline consumption is used for electronic cash, and no password verification is required in the card swiping process; therefore, if the card is lost, it means that the cash is lost directly. Thus, in use, the user typically loads a small amount of electronic cash. When the amount is used up, an on-line operation is required for loading electronic cash again.

However, with an increase of the frequency at which the user uses electronic cash, a small amount of electronic cash is prone to insufficient balance, and the user will have to perform on-line loading frequently, which will undoubtedly cause inconvenience to the user, especially when the very form of IC card is used by user, meaning that no intelligent terminal is available on hand for on-line loading and leading to a greater inconvenience.

### SUMMARY OF THE INVENTION

In view of the above problem, the invention aims to provide an IC card electronic cash offline loading system and an IC card electronic cash offline loading method that can realize offline load of electronic cash of an IC card.

An IC card electronic cash offline loading system according to the invention is characterized by comprising an IC card, a POS terminal, and a bank backstage system,
the IC card comprising:
   electronic cash which stores a certain amount for offline consumption by user; and
   a load application module which comprises a recharging module and a first interaction module, wherein the recharging module is used for performing data interaction with the electronic cash and for completing load of the electronic cash, the first interaction module is used for performing data interaction with the POS terminal and for transmitting loaded amount data to the recharging module,
      the POS terminal having a loading device which comprises:
         a second interaction module used for performing data interaction with the load application module; and
         a recharged amount uploading module used for transmitting the loaded amount data sent from the load application module to the bank backstage system,
      the bank backstage system is used for deducting the electronic cash recharged amount for the account and confirming the loaded amount according to the loaded amount data transmitted from the recharged amount uploading module.

Preferably, the second interaction module is also used for providing a password box and setting a valid time of load application.

Preferably, the bank backstage system is also used for providing the valid time of load application.

Preferably, the electronic cash is connected with the first interaction module, the recharging module is connected with the first interaction module, the second interaction module is connected with the recharged amount uploading module, and the recharged amount up-loading module is communicatively connected with the bank backstage system.

The IC card electronic cash offline loading method according to the invention is a method realized by using a load application module provided in the IC card, a loading device in a POS terminal, and a bank backstage system, comprising the following steps:
a loaded amount locking step: the load application module initiates a confirming request of a loaded amount recharged on electronic cash; after the user enters the loaded amount, the load application module sends the loaded amount to the bank backstage system via the loading device of the POS terminal; after the loaded amount and load time are confirmed and stored by the bank backstage system, the loaded amount and the load time are sent to the load application module via the loading device of the POS terminal;
a loading application setting step: the user initiates a request from the loading device of the POS terminal, which request is used for setting the electronic cash recharged amount each time the load application module recharges on the electronic cash and a valid time of load application; and the set electronic cash recharged amount and the valid time of load application are stored in the load application module;
an electronic cash recharging step: in case that the user conducts offline consumption using electronic cash with insufficient balance, the load application module automatically recharges the electronic cash for the loading device of the POS terminal so that the electronic cash is recharged according to the electronic cash recharged amount; and recharging information containing the electronic cash recharged amount is stored in the POS terminal; and
an amount deducting step: the recharging information is sent to the bank backstage system from the POS terminal; according to the recharging information, the bank backstage system deducts the electronic cash recharged amount from the loaded amount stored in the bank backstage system.

Preferably, the loaded amount locking step comprises the following sub-steps:
the load application module initiates a confirming request of a loaded amount recharged on electronic cash;
after the user inputs the loaded amount in the POS terminal, the loading device of the POS terminal returns the loaded amount to the load application module;
the load application module generates loaded amount authorized information according to the loaded amount and sends the loaded amount authorized information to the loading device of the POS terminal;
the loading device of the POS terminal sends the loaded amount authorized information to bank backstage system;
in case that it is confirmed the balance of the user's account is insufficient, the bank backstage system locks the loaded amount in the user's account for loading application, generates the loaded amount confirming information and send it to the loading device of the POS terminal;
the loading device of the POS terminal sends to the loaded amount confirming information to the load application module.

Preferably, IC card secret key encrypting is used in the information interaction between the loading device of the POS terminal and the bank backstage system.

Preferably, the loading application setting step comprises the following sub-steps:
the user inputs the electronic cash recharged amount and the valid time of load application via the loading device of the POS terminal;
the loading device of the POS terminal sends the electronic cash recharged amount and the valid time of load application to the load application module; and
the load application module sets the electronic cash recharged amount and the valid time of load application according to electronic cash recharged amount and the valid time of load application.

Preferably, the electronic cash recharging step comprises the following sub-steps:
the load application module requests time from the loading device of the POS terminal;
the loading device of the POS terminal returns the time to the load application module;
the load application module determines whether the interval between the time of this recharging and the time of last recharging is within the set valid time of load application; if the valid time is exceeded, a subsequent recharging is rejected; if within the valid time, the time of last recharging in the load application module is updated to be this time of returning from the loading device of the POS terminal;
the load application module sends a request for password box entering command to the loading device of the POS terminal;
according to the command requesting entry of password box sent from the load application module, the loading device of the POS terminal displays a password entry box on the POS terminal so that the user can enter loading password via the password entry box;
the loading device of the POS terminal packages the entered loading password into password returning information to be returned to the load application module;
the load application module obtains the loading password according to the password returning information and compares the loading password with a predetermined password set in advance in load application module, and recharges the electronic cash according to the electronic cash recharged amount only when the loading password matches with the predetermined password;
the load application module generates recharging information according to the electronic cash recharged amount and sends the recharging information to the loading device of the POS terminal; and
the loading device of the POS terminal stores the recharging information and informs the user of a completion of recharging the electronic cash.

Preferably, the load application module uses IC card secret key to encrypt the electronic cash recharged amount so as to generate the recharging information.

Preferably, the amount deducting step comprises the following sub-steps:
the recharging information is sent from the POS terminal to the bank backstage system via network;
the bank backstage system analyzes the recharging information and acquires the electronic cash recharged amount therefrom; and
the bank backstage system deducts the electronic cash recharged amount from the stored loaded amount.

In the IC card electronic cash offline loading system and an IC card electronic cash offline loading method according to the invention, by providing a load application module in the IC card and providing a loading device in the POS terminal, an offline load of electronic cash is enabled. Moreover, users can use electronic cash more conveniently, and simultaneously, user's experience in using electronic cash can be improved. In addition, when using the load application module in the IC card and the loading device in the POS terminal to load electronic cash, by providing password protection and providing an overall loaded amount, there is no need for users to worry that the amount of the load application maliciously, even if in case that the IC card is lost. There will also be no amount loss in the account, and the security of account is enhanced.

### BRIEF DESCRIPTION OF THE DRAWINGS

Fig. 1 is a schematic structure view of an IC card electronic cash offline loading system according to the invention.
Fig. 2 is a specific flowchart showing the loaded amount locking step in the invention.
Figs. 3 and 4 are specific flowcharts showing the loading application setting step in the invention.
Fig. 5 is a specific flowchart showing the electronic cash recharging step in the invention.
Fig. 6 is a specific flowchart showing the amount deducting step in the invention.
Fig. 7 is a specific flowchart showing a load application valid period resetting step in the invention.
Fig. 8 is a specific flowchart showing a load application binding cancelling step in the invention.

### DETAILED DESCRIPTION OF THE INVENTION

Some of a plurality of embodiments of the invention will be described below with the purpose of providing a basic understanding of the invention rather than identifying key elements or crucial elements of the invention or limiting the scope of protection.

The IC card electronic cash offline loading system and an IC card electronic cash offline loading method provided by the invention are proposed with the purpose of enabling users to load electronic cash even in an offline state. The main technical concept is explained as follows: a load application module is provided in the IC card and is bound to the bank account of the user; a loaded amount limit is set for the electronic cash application; when the balance of the electronic cash is insufficient, the load application module in the IC card initiates recharging the electronic cash, and packages the recharged amount into data to be sent to the POS terminal which sends the recharged amount data message to the bank backstage system during a subsequent batch settlement process, and the bank backstage system conducts a corresponding amount deducting action.

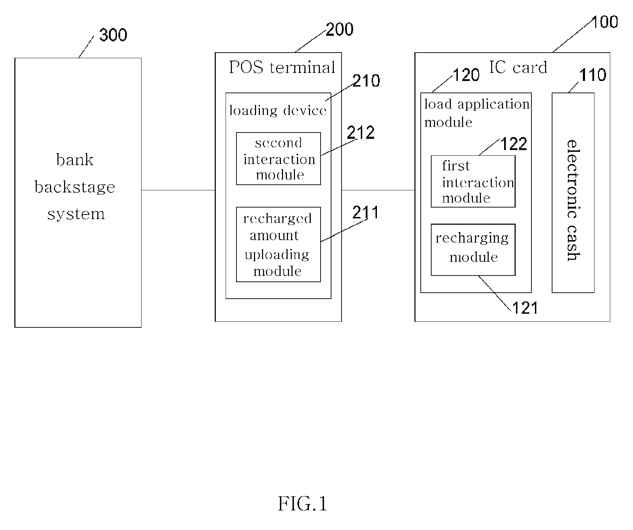

Fig. 1 is a schematic structure view of an IC card electronic cash offline loading system according to the invention. The IC card electronic cash offline loading system according to the invention will be described below in detail with reference to Fig. 1.

As shown in Fig.1, the IC card electronic cash offline loading system according to the invention comprises an IC card 100, a POS terminal 200 and a bank backstage system 300.

The IC card 100 comprises electronic cash 110 and a load application module 120.

The electronic cash 110 stores a certain amount for offline consumption by users.

The load application module 120 comprises a recharging module 121 and a first interaction module 122, wherein the recharging module 121 is used for data interaction with the electronic cash and for completing a load of the electronic cash 110, and the first interaction module 122 is used for data interaction with the POS terminal 200 and for transmitting loaded amount data to the recharging module 121.

The POS terminal 200 comprises a loading device 210. The loading device 210 comprises a second interaction module 212 used for data interaction with the load application module 120 and also for providing a password box and setting a valid time of load application; and a recharged amount uploading module 211 used for transmitting the loaded amount data sent from the load application module 120 to the bank backstage system 300.

The bank backstage system 300 is used for deducting the electronic cash recharged amount for the account and confirming the loaded amount according to the loaded amount data transmitted from the recharged amount uploading module 121, and for providing time, etc. The second interaction module is also used for providing a password box and setting a valid time of load application.

The electronic cash 110 is connected with the first interaction module 122, the recharging module 121 is connected with the first interaction module 122, the second interaction module 212 is connected with the recharged amount uploading module 211, and the recharged amount uploading module 211 is communicatively connected with the bank backstage system 300.

The IC card electronic cash offline loading method according to the invention will be described below.

The IC card electronic cash offline loading method according to the invention is a method realized by using the load application module 120 provided in the IC card 100, the loading device 210 in the POS terminal 200, and the bank backstage system 300, and the IC card electronic cash offline loading method according to the invention mainly comprises the following steps:
a loaded amount locking step: the load application module 120 of the IC card 100 initiates a confirming request of a loaded amount recharged on the electronic cash; after the user enters the loaded amount, the load application module 120 of the IC card sends the loaded amount to the bank backstage system 300 via the loading device 210 of the POS terminal 200; after the loaded amount and load time are confirmed and stored by the bank backstage system 300, the loaded amount and the load time are sent to the load application module 120 of the IC card 100 via the loading device 210 of the POS terminal 200;
a loading application setting step: the user initiates a request from the loading device 210 of the POS terminal 200, which request is used for setting the electronic cash recharged amount each time the load application module 120 of the IC card 100 recharges on the electronic cash and a valid time of load application; and the set electronic cash recharged amount and the valid time of load application are stored in the load application module 120 of the IC card;
an electronic cash recharging step: in case that the user conducts offline consumption using electronic cash with insufficient balance, the load application module 120 of the IC card automatically recharges the electronic cash for the loading device 210 of the POS terminal 200 so that the electronic cash is recharged according to the electronic cash recharged amount; and recharging information containing the electronic cash recharged amount is stored in the POS terminal 200; and
an amount deducting step: the recharging information is sent to the bank backstage system 300 from the POS terminal 200; according to the recharging information, the bank backstage system 300 deducts the electronic cash recharged amount from the loaded amount stored in the bank backstage system 300.

Each step will be described below in detail.

Firstly, the loaded amount locking step is explained.

The IC card has to lock a certain loaded amount which is used for the electronic cash. After the loaded amount is used up, it has to be re-assigned, and this process needs to be connected online.

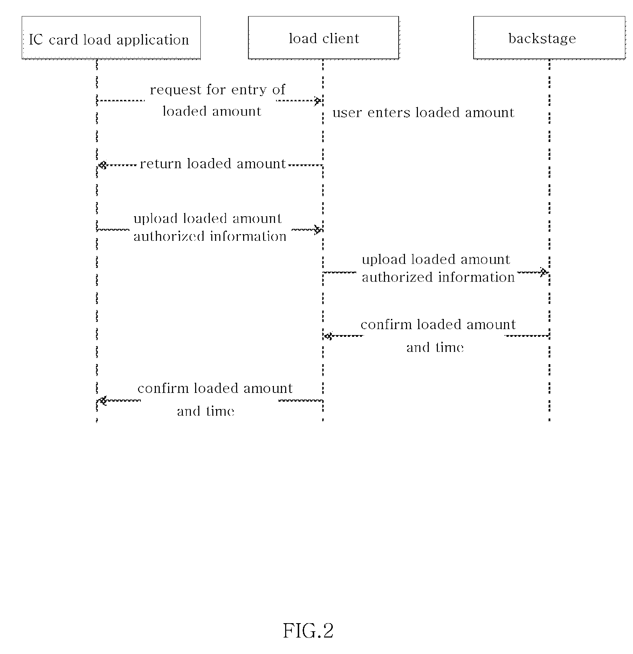

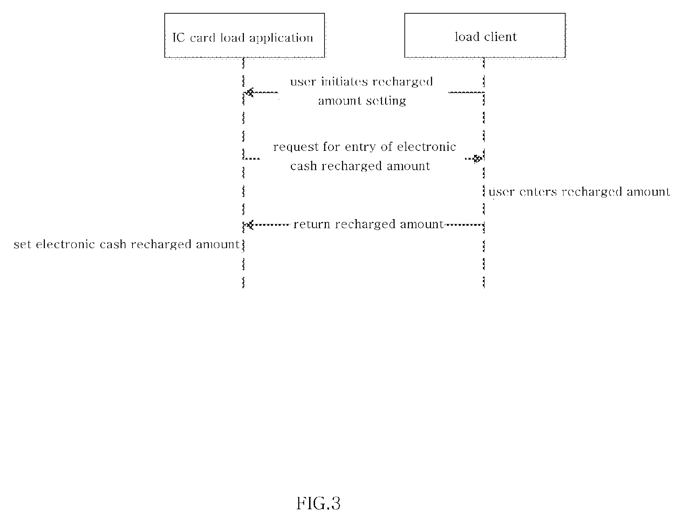

Fig. 2 is a specific flowchart showing the loaded amount locking step in the invention. The "IC card load application" in Fig. 2 is an abbreviation for "the load application module 120 of the IC card 100" , the "load client" is an abbreviation for "the loading device 210 of the POS terminal 200", and the "backstage" is an abbreviation for "the bank backstage system 300". The above abbreviations will also be used directly in the description of Fig. 2 and in the following Figs. 3-8 as well as a description thereof.

The loaded amount locking step will be described in detail below with reference to Fig. 2. As shown in Fig. 2, the loaded amount locking step comprises:
(1) firstly, the IC card has to be inserted into the POS terminal 200 that can be connected online, wherein the loading device 210 is installed in the POS terminal 200;
(2) the IC card load application requests entry of loaded amount;
(3) the user enters a certain amount of loaded amount on the POS terminal 200;
(4) the load client returns the loaded amount to the load application;
(5) the IC card load application generates loaded amount authorized information and sends it to the load client which forwards the loaded amount authorized information to the bank backstage;
(6) the bank backstage confirms that the balance of user's account is sufficient, and locks the loaded amount in the user's account (similar to a pre-authorized activity, and it is recommended that the loaded amount is more than 10 times of the electronic cash recharged amount) for the IC card load application, and regenerates confirmed loaded amount information (which contains backstage time) to be sent to the load client, which sends the confirmed loaded amount information to the IC card load application;
(7) the IC card load application sets the loaded amount and load time, thus completing the loaded amount locking step.

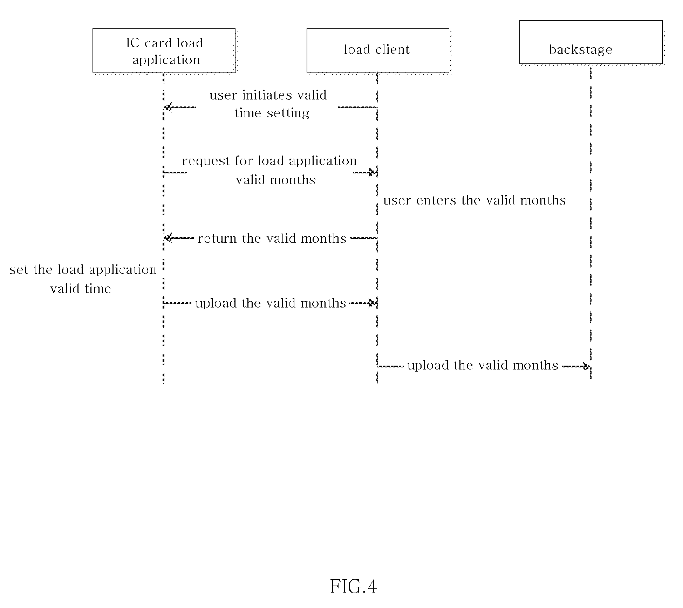

Figs. 3 and 4 are specific flowcharts showing the loading application setting step in the invention.

The loading application setting step is mainly used for setting the amount and a valid time of load application (i.e., a time interval between this time of recharging and last time of recharging) each time the load application recharges on the electronic cash. This process relates to two procedure of setting, one procedure for setting the amount, and the other procedure for setting the valid time of load application.

As shown in Fig. 3, the step of setting the amount is specifically executed as follows:
(1) the user initiates an amount setting from the load client; that is, the user uses the load client to open the IC card load application setting function and selects an electronic cash recharged amount setting;
(2) the IC card load application requests the load client to enter the electronic cash recharged amount;
(3) the user enters the electronic cash recharged amount at the load client, which returns the amount to the IC card load application;
(4) the IC card load application sets the electronic cash recharged amount according to the received amount.

As shown in Fig. 4, the step of setting the valid time of load application is specifically executed as follows:
(1) the user uses the load client to open the IC card load application setting function and selects a load application valid time setting so as to initiate a valid time setting request to the IC card load application;
(2) the IC card load application requests the load client to enter application valid time (e.g., valid months);
(3) the user enters the valid months (e.g., 3 months, etc.) at the load client, which returns the valid months to the IC card load application;
(4) the IC card load application sets the valid time of load application according to the received valid months, and sends the valid months to the load client which forwards the valid months to the backstage.

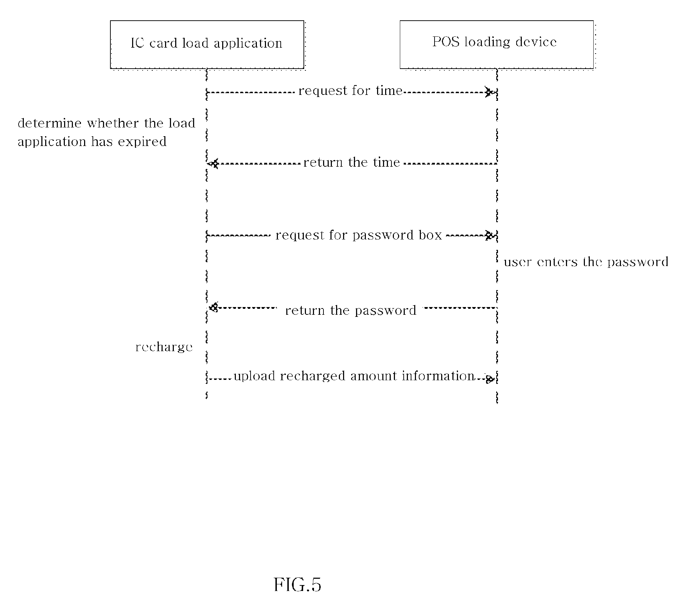

Fig. 5 is a specific flowchart showing the electronic cash recharging step in the invention. When the user uses the electronic cash to conduct offline consumption, if the balance is insufficient, the IC card load application starts to initiate the electronic cash recharging step. The specific process of the electronic cash recharging step will be described below with reference to Fig. 5.

As shown in Fig. 5, the electronic cash recharging step comprises:
(1) the IC card load application requests time from the POS loading device;
(2) the POS loading device returns the time to the IC card load application, wherein the time is obtained by the POS terminal each time it interacts with the backstage;
(3) the IC card load application determines whether the load application has expired; specifically, the IC card load application determines whether the interval between the time of this recharging and the time of last recharging ("the time of last recharging" for the first recharging is load time) is within the valid time of load application; if the valid time is exceeded, a subsequent recharging is rejected; if within the valid time, the time of last recharging of the load application is updated to be the newly received time of the POS terminal;
(4) the IC card load application sends a request for password box entering command to the POS loading device;
(5) the POS terminal analyzes the password box entering command and displays a password entry box on the POS terminal;
(6) the user enters the loading password;
(7) the POS terminal packages the password into password returning information to be returned to the IC card load application;
(8) the IC card load application obtains the password from the password returning information and compares the password with a recharging password stored in advance in the IC card load application; if they do not match, password error information is sent to the POS terminal; if they match, the electronic cash is recharged according to the electronic cash recharged amount (if the loaded amount is not enough for the electronic cash recharged amount, it is prompted that the load application has insufficient balance);
(9) the IC card load application uses IC card secret key to encrypt information such as the recharged amount and generates encrypted recharging information, and the IC card load application uploads the recharging information to the POS loading device;
(10) the recharged amount uploading module 211 in the POS loading device stores the received recharging information and informs the user of a completion of recharging the electronic cash.

The above recharging process is completed in an offline state and there is no need for networking. After the recharging is completed, users can use the electronic cash for offline consumption.

In addition, due to the problem of inability to recharge caused by expiration of the valid time of load application in the above recharging process, there is a need to perform a valid time resetting procedure on the load client, or the POS terminal can be also avoided by introducing the valid time resetting procedure. However, the valid time is typically set by users. Therefore, for users who use the electronic cash frequently, a recharging activity may occur in this valid time, and the load application will update the time of last recharging constantly, thus avoiding the problem of inability to recharge due to expiration of the valid time. Therefore, this function is not realized by forcing the POS terminal.

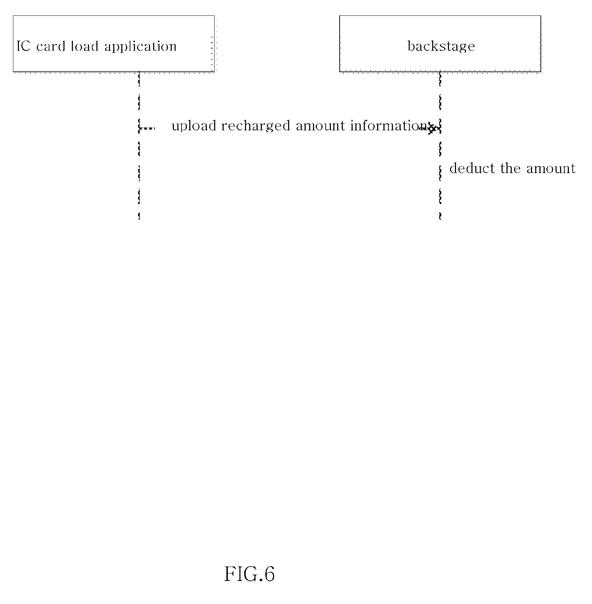

Fig. 6 is a specific flowchart showing the amount deducting step in the invention. After the user uses the load application to complete recharging and offline consumption, information on recharged amount that has exceeded that in the POS terminal has to be sent to the backstage by the POS terminal via network at an appropriate time (e.g., when the batch settlement is conducted) at a later stage.

The specific process of the amount deducting step will be described below with reference to Fig. 6.

As shown in Fig. 6, the amount deducting step comprises:
(1) the POS load device sends the stored uploaded recharging information to the backstage via network;
(2) the backstage analyzes the recharging information so as to obtain the recharged amount therein, and deducts the recharged amount from the loaded amount locked in the user's account, thus completing the amount deducting process.

Next, a description will be given to the two optional steps in the IC card electronic cash offline loading method according to the invention, i.e., a load application valid time resetting step and a load application binding cancelling step.

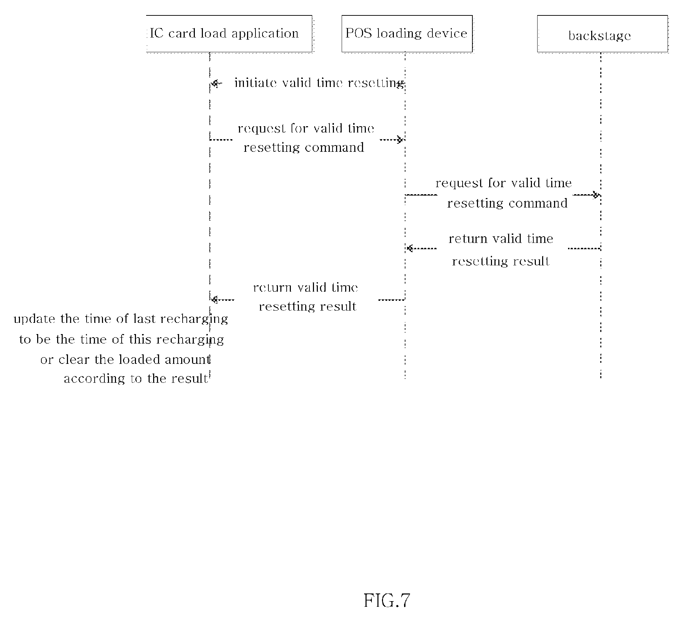

Fig. 7 is a specific flowchart showing a load application valid period resetting step in the invention. When a recharging process has not been performed on the load application for a long time and this time period has exceeded a valid load time set by the user, the user has to perform a load application valid time resetting process on the load client.

The specific process of the load application valid time resetting step will be described below with reference to Fig. 7.

As shown in Fig. 7, the load application valid time resetting step comprises:
(1) the user initiates a valid time resetting request at the load client;
(2) the load application generates a request for valid time resetting command (containing user's account information) to be sent to the load client;
(3) after the backstage receives the valid time resetting command, it is determined that whether the account in the command has cancelled binding with the load application; if not cancelled, a valid time confirming command (which contains the latest time) is generated and forwarded by the load client to the IC card load application, and the IC card load application updates the time of last recharging to be the latest time contained in the command according to the command; if cancelled, the backstage sends a valid time resetting rejecting command to be forwarded by the load client to the IC card load application which clears the loaded amount of the load application according to the command.

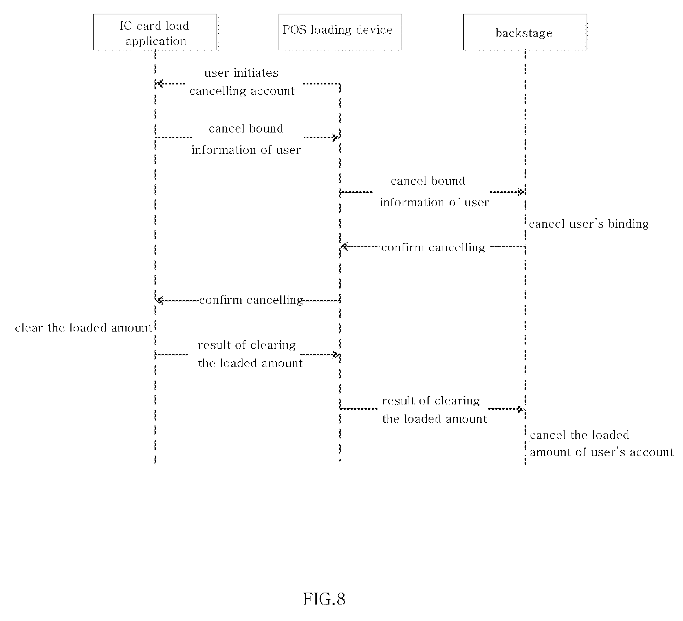

Fig. 8 is a specific flowchart showing a load application binding cancelling step in the invention. When the user has to cancel the account bound with the load application, there are two situations: one initiated by the user actively, and one initiated passively due to loss of user's card.

The specific process of the load application binding cancelling step will be described below with reference to Fig. 8. As shown in Fig. 8, an account cancelling process initiated actively by the user comprises:
(1) the user initiates an account cancelling request from the load client;
(2) the IC card load application sends an account binding information cancelling command to the load client which forwards the account binding information cancelling command to the backstage;
(3) the backstage cancels the account's binding with the load application according to the account binding information cancelling command, and the load client forwards a result of confirmed cancelling to the IC card load application;
(4) the IC card load application, after receiving the result of confirmed cancelling, clears the load amount, and uploads the clearing result to the load client which forwards the clearing result to the backstage;
(5) the backstage, after receiving the clearing result, unlocks the loaded amount of the user's account.

In addition, an account cancelling process initiated due to loss of user's card comprises the following steps:
(1) the user initiates a binding cancelling application to the bank
(2) the bank operation backstage cancels the binding of user's account and the load application, and cancels the loaded amount of the user's account after a load application valid time dated from that day on; if recharged amount uploading information is received during this process, a deducting action is continued and completed, and the loaded amount is settled after a load application valid time re-dated from that time.

As described above, in the IC card electronic cash offline loading system and an IC card electronic cash offline loading method according to the invention, by providing a load application module 120 in the IC card 100 and providing a loading device 210 in the POS terminal 200, an offline load of electronic cash is enabled. Moreover, users can use electronic cash more conveniently, and simultaneously, user's experience in using electronic cash can be improved. In addition, when using the load application module 120 in the IC card 100 and the loading device 210 in the POS terminal 200 to load electronic cash, by providing password protection and providing an overall loaded amount, there is no need for users to worry that the amount of the load application maliciously, even if in case that the IC card is lost. There will also be no amount loss in the account, and the security of account is enhanced.

The above embodiments mainly describe the IC card electronic cash offline loading system and an IC card electronic cash offline loading method according to the invention. While only some of the embodiments of the invention have been described, those skilled in the art will understand that the invention can be carried out in many other forms without departing from the spirit and scope thereof. Therefore, the illustrated examples and embodiments should be interpreted as schematic rather than limiting, and the invention can cover various modifications and replacements without departing form the spirit and scope of the invention defined by the appended claims.

## Claims

1. An IC card electronic cash offline loading system **characterized by** comprising an IC card, a POS terminal, and a bank backstage system,
the IC card comprising:
electronic cash which stores a certain amount for offline consumption by user; and
a load application module which comprises a recharging module and a first interaction module, wherein the recharging module is used for performing data interaction with the electronic cash and for completing load of the electronic cash, the first interaction module is used for performing data interaction with the POS terminal and for transmitting loaded amount data to the recharging module,
the POS terminal having a loading device which comprises:
a second interaction module used for performing data interaction with the load application module; and
a recharged amount uploading module used for transmitting the loaded amount data sent from the load
application module to the bank backstage system,
the bank backstage system is used for deducting the electronic cash recharged amount for the account and confirming the loaded amount according to the loaded amount data transmitted from the recharged amount uploading module

2. The IC card electronic cash offline loading system according to claim 1, **characterized in that**,
the second interaction module is also used for providing a password box and setting a valid time of load application.

3. The IC card electronic cash offline loading system according to claim 1, **characterized in that**,
the bank backstage system is also used for providing the valid time of load application.

4. The IC card electronic cash offline loading system according to claim 1, **characterized in that**,
the electronic cash is connected with the first interaction module,
the recharging module is connected with the first interaction module,
the second interaction module is connected with the recharged amount uploading module, and
the recharged amount uploading module is communicatively connected with the bank backstage system.

5. An IC card electronic cash offline loading method, which is a method realized by using a load application module provided in the IC card, a loading device in a POS terminal, and a bank backstage system, comprising the following steps:
a loaded amount locking step: the load application module initiates a confirming request of a loaded amount recharged on electronic cash; after the user enters the loaded amount, the load application module sends the loaded amount to the bank backstage system via the loading device of the POS terminal; after the loaded amount and load time are confirmed and stored by the bank backstage system, the loaded amount and the load time are sent to the load application module via the loading device of the POS terminal;
a loading application setting step: the user initiates a request from the loading device of the POS terminal, which request is used for setting the electronic cash recharged amount each time the load application module recharges on the electronic cash and a valid time of load application; and the set electronic cash recharged amount and the valid time of load application are stored in the load application module;
an electronic cash recharging step: in case that the user conducts offline consumption using electronic cash with insufficient balance, the load application module automatically recharges the electronic cash for the loading device of the POS terminal so that the electronic cash is recharged according to the electronic cash recharged amount; and recharging information containing the electronic cash recharged amount is stored in the POS terminal; and
an amount deducting step: the recharging information is sent to the bank backstage system from the POS terminal; according to the recharging information, the bank backstage system deducts the electronic cash recharged amount from the loaded amount stored in the bank backstage system.

6. The IC card electronic cash offline loading method according to claim 5, **characterized in that**,
the loaded amount locking step comprises the following sub-steps:
the load application module initiates a confirming request of a loaded amount recharged on electronic cash;
after the user inputs the loaded amount in the POS terminal, the loading device of the POS terminal returns the loaded amount to the load application module;
the load application module generates loaded amount authorized information according to the loaded amount and sends the loaded amount authorized information to the loading device of the POS terminal;
the loading device of the POS terminal sends the loaded amount authorized information to bank backstage system;
in case that it is confirmed the balance of the user's account is insufficient, the bank backstage system locks the loaded amount in the user's account for loading application, generates the loaded amount confirming information and send it to the loading device of the POS terminal; and
the loading device of the POS terminal sends to the loaded amount confirming information to the load application module.

7. The IC card electronic cash offline loading method according to claim 6, **characterized in that**,
IC card secret key encrypting is used in the information interaction between the loading device of the POS terminal and the bank backstage system.

8. The IC card electronic cash offline loading method according to claim 7, **characterized in that**,
the loading application setting step comprises the following sub-steps:
the user inputs the electronic cash recharged amount and the valid time of load application via the loading device of the POS terminal;
the loading device of the POS terminal sends the electronic cash recharged amount and the valid time of load application to the load application module; and
the load application module sets the electronic cash recharged amount and the valid time of load application according to electronic cash recharged amount and the valid time of load application.

9. The IC card electronic cash offline loading method according to claim 8, **characterized in that**,
the electronic cash recharging step comprises the following sub-steps:
the load application module requests time from the loading device of the POS terminal;
the loading device of the POS terminal returns the time to the load application module;
the load application module determines whether the interval between the time of this recharging and the time of last recharging is within the set valid time of load application; if the valid time is exceeded, a subsequent recharging is rejected; if within the valid time, the time of last recharging in the load application module is updated to be this time of returning from the loading device of the POS terminal;
the load application module sends a request for password box entering command to the loading device of the POS terminal;
according to the command requesting entry of password box sent from the load application module, the loading device of the POS terminal displays a password entry box on the POS terminal so that the user can enter loading password via the password entry box;
the loading device of the POS terminal packages the entered loading password into password returning information to be returned to the load application module;
the load application module obtains the loading password according to the password returning information and compares the loading password with a predetermined password set in advance in load application module, and recharges the electronic cash according to the electronic cash recharged amount only when the loading password matches with the predetermined password;
the load application module generates recharging information according to the electronic cash recharged amount and sends the recharging information to the loading device of the POS terminal; and
the loading device of the POS terminal stores the recharging information and informs the user of a completion of recharging the electronic cash.

10. The IC card electronic cash offline loading method according to claim 9, **characterized in that**,
the load application module uses IC card secret key to encrypt the electronic cash recharged amount so as to generate the recharging information.

11. The IC card electronic cash offline loading method according to claim 10, **characterized in that**,
the amount deducting step comprises the following sub-steps:
the recharging information is sent from the POS terminal to the bank backstage system via network;
the bank backstage system analyzes the recharging information and acquires the electronic cash recharged amount therefrom; and
the bank backstage system deducts the electronic cash recharged amount from the stored loaded amount.
